Europäisches Patentamt

European Patent Office

Office européen des brevets

(11) Publication number: **0 426 432 A2**

# EUROPEAN PATENT APPLICATION

(21) Application number: 90311880.0

(22) Date of filing: 30.10.90

(51) Int. Cl.⁵: **G07C 9/00**, G06K 9/22

(30) Priority: 31.10.89 GB 8924445

(43) Date of publication of application:
08.05.91 Bulletin 91/19

(84) Designated Contracting States:
BE DE ES FR GB IT NL SE

(71) Applicant: **DE LA RUE SYSTEMS LIMITED**
**De la Rue House 3/5 Burlington Gardens**
**London W1A 1DL(GB)**

(72) Inventor: **Newman, Roger Keith**
**Meadow Croft, Hoe Road, Bishops Waltham**
**Southampton, Hampshire(GB)**
Inventor: **Duncan, Fergus Ion**
**10 Lyne Grove**
**Crossford, Fife, KY12 8YE(GB)**

(74) Representative: **Skone James, Robert Edmund**
**et al**
**GILL JENNINGS & EVERY 53-64 Chancery**
**Lane**
**London WC2A 1HN(GB)**

(54) Biometric reading assembly and method.

(57) A biometric reading assembly comprises a physical biometric reading device (22), such as a signature pad, for receiving a physical biometric attribute. A control system (30) is coupled to the biometric reading device to analyze the attribute read by the reading device and is adapted to prevent the presentation of a biometric attribute when the device is not ready to receive an attribute by causing movement of an attribute receiving surface (31).

EP 0 426 432 A2

## BIOMETRIC READING ASSEMBLY AND METHOD

The invention relates to a biometric reading assembly and method for use in a transfer of value between a customer and a supplier and during enrolment.

One of the problems with physical biometrics such as signatures is that there is little control over the presentation of such biometrics both during enrolment and during a transfer of value transaction even when the process is supervised. A typical signature unit controls the signing process via a series of displayed messages, for example "sign now", "wait", and "sign again". During the "wait" period processing is carried out on the submitted data and any further signing activity is ignored. Thus, if the user attempts to provide a further signature during the "wait" period, the signature or that portion of it provided during the "wait" period will not be recorded with the result that an error condition will arise or a false reading of the signature will be obtained. This is particularly the case during enrolment when a number of samples of a physical biometric are normally presented following which some form of averaging takes place to generate a reference biometric. It is important that the user does not supply his signatures too quickly. The problem also arises during a transfer of value transaction. For example, a user may believe, rightly or wrongly, that he has not presented his signature correctly and attempt to provide a further signature before the verification device is ready to receive it.

In order to prevent these problems, it might be possible continuously to monitor for the presentation of a biometric attribute so that illegal presentations can be detected and "cancelled". Alternatively, some physical means such as a barrier could be positioned to prevent an illegal presentation. Both of these solutions lead to an increase in the complexity of the assembly and are undesirable.

In accordance with one aspect of the present invention, a biometric reading assembly comprises a physical biometric reading device for reading a physical biometric attribute received on an attribute receiving surface; and control means coupled to the biometric reading device to analyze the attribute read by the reading device, the control means being adapted to prevent the presentation of a biometric attribute when the device is not ready to receive an attribute by causing movement of the attribute receiving surface.

In accordance with a second aspect of the present invention, a method of operating a physical biometric reading device, in which a physical biometric attribute is presented to an attribute receiving surface, comprises preventing presentation of an attribute when the reading device is not ready to receive an attribute by causing movement of the attribute receiving surface.

We have devised a new biometric reading assembly and method for use either during enrolment or during a transfer of value transaction in which the presentation of a biometric attribute is prevented by the control means of the assembly moving the attribute receiving surface. The prevention step may occur whenever the reading device is not ready to receive an attribute but more commonly at times close to times when the device is ready to receive an attribute. For example, movement may be initiated immediately after an attribute has been received to prevent a repeat attribute being supplied too quickly. At other times, for example between transactions or between enrolments the reading device may simply be rendered inactive.

Preferably, the assembly further comprises record medium movement means for moving a record medium constituting the attribute receiving surface, past the biometric reading device, the control means controlling operation of the record medium movement means so that record medium is moved past the biometric reading device when the device is not ready to receive an attribute thereby preventing presentation of the attribute. This is useful during enrolment but is particularly useful during a transfer of value transaction enabling the submitted attribute to be permanently recorded.

A variety of terminals are available for transacting a transfer of value. The transfer of value may be of a monetary nature, for example an EFTPOS (Electronic Funds Transfer at Point of Sale) transaction; or of a non-monetary value, for example the placing of a purchase order.

In the past the authorisation and hence acceptance of the transaction has been primarily achieved by offering and acceptance of a signature; and occasionally by means of offering of a personal identity number (PIN).

In the case of a signature (or other physical biometric) based transaction, other than a cursory check of the actual signature no authentication is done of the person making the transaction. PIN is rarely used, being "non-User friendly" and open to abuse.

Therefore doubt exists as to whether the person authorising the transaction is the true person.

Equally with an increasing volume of terminals being used by commerce and industry, a more positive means of proof of authorisation of transactions is needed.

EP-A-0156509 mentions performing a signature verification operation in conjunction with an EFTPOS based transaction. However, this specification describes a rather different approach in which signature-data is captured on a portable unit which is then connected to a stationary analysis unit for further analysis. Furthermore, the overall transaction time is long due to the need to wait for a printer to print transaction details on a record slip and to enable the signature verification to be separately performed.

We therefore provide a transaction device for use in controlling a transfer of value between a customer and a supplier, the device comprising a housing supporting an assembly according to the first aspect of the invention, input means mounted to the housing, the control means being coupled to the input means for receiving data relating to the transaction from the input means, printing means coupled to the control means for printing data relating to the transaction, and physical biometric verification means coupled to the control means for verifying a biometric attribute of the customer, whereby the control means indicates that the transaction may be completed if the biometric attribute is verified, the verification means being adapted to prevent the presentation of a biometric attribute during a transfer of value transaction when the biometric reading device is not ready to receive an attribute.

This is particularly useful for EFTPOS systems in which both the transaction device and biometric verification means are incorporated in a single housing. It is necessary in such a system to prevent the biometric attribute being presented at a time when the biometric verification means is not prepared to receive it and consequently some means for preventing that from taking place is necessary.

Thus, during a transfer of value transaction once the attribute has been applied, the receiving surface (such as a record medium) commences movement to prevent any further application of an attribute until the reading device (eg signature pad) is ready to receive the next attribute.

Physical biometric attributes include signatures and fingerprints. Signature is generally accepted as being the most natural of biometrics but has not received ready acceptance in the past (as is the case with all biometrics) by not being an integrated part of the transaction function. The invention enables the bringing together, in an innovative manner, of a means of integrating the authorisation process into a value transaction device.

The use of a single housing enables the design of an economically satisfactory housing which can be compact and adapted for the particular biometric feature or features which are to be verified. Further advantages of a single housing are that it will save space which is at a premium in a typical POS situation, it will be less expensive since manufacturing costs should be lower than for multiple housings, and it will be easier to make tamper resistant.

Incorporating the verification system into an EFTPOS system enables much more complex authorising rules to be set up than has been possible in the past. In particular, these rules can be more complex than a merchant could carry out thereby reducing the possibility that the customer will not make "payment" for the transaction. The authorisation rules can take into account items such as the nature of the transaction and its environment, for example customer behaviour pattern, merchant considerations, value of transaction, possibility of fraud considerations and the like. The need for a "telephone referral" is reduced since the system itself can make the decision, the possibility of fraud is reduced since the customer is authenticated by a biometric and connivance by the merchant is prevented, and in the preferred example, details of the transaction, in particular the result of the customer authentication, can be recorded.

The integrated unit in a single housing also allows the various processes to be better controlled. Further, customer confidence is gained since the transfer of value is witnessed (by the customer); that is the merchant does not take away the customer's financial transaction card (or the like) for processing. Other advantages of an integrated system include reducing the possibility of error since the relevant data can be input automatically from a card or the like; the transfer of value is directly linked to the authentication of the customer by the system itself; the details of the transaction can be recorded by the system; any override of the system (by the merchant) may be recorded by the system; and data interchange can be permitted to take place via a communications link between a merchant and the system/service supplier.

An important advantage of the integrated system is that time overlap of some process functions can be permitted so as to reduce the overall time taken for the transaction.

Typically, the control means will be adapted to cause the printing means to print additional data after a customer has been verified. For example, the control means can print on a record medium the fact that the customer has been verified or not verified.

In some cases, the device may be connected to a remote database, for example via a telephone link or the like, to enable reference data relating to the customer to be accessed. Alternatively, the biometric verification means may include data entry means for enabling reference data relating to the customer to be entered. For example, the data entry means may comprise an IC card coupler and reader or magnetic stripe reader to enable data held on a credit card like article to be read.

The biometric verification means may be of any conventional type but in the preferred arrangement comprises a signature verification means, the reading device comprising a signature pad positioned under the path of a record medium (for example paper) on which transaction data is printed by the printing means.

This arrangement allows a signature verification to be performed in a much more acceptable manner than has hitherto been possible. Thus, the record medium on which transaction data is printed passes directly over the signature pad and the customer signs the record medium in the same manner as at present but due to the location of the signature panel and the relative positioning of the record medium by the control means, the signature data is communicated to the signature pad.

To assist in ensuring that the attribute is written in the correct position, the device preferably further includes a mask defining a window over the record medium path and in alignment with the reading device.

In addition, the device may further include guide means arranged alongside the record medium path to restrict movement of the record medium during the presentation process. This will reduce accidental movement of the record medium and reduce the risk of an atypical signature, for example. Preferably, the guide means is in the form of a channel which restricts lateral movement of the record medium.

In order to assist in the use of the device, display means is preferably provided to display control information to the user. The display means can be very simple and comprise one or two lights or could comprise a more fuller display such as an LCD display.

Preferably, during movement of the record medium, transaction data is printed on the record medium. Furthermore, it is particularly preferable if, following presentation of an attribute, further data is printed on the record medium. Such data may include an indication of whether or not the transaction has been authorised and, where verification means is incorporated into a transaction device, an indication that the transaction itself has been completed.

In order to assist the user, it is preferable that during movement of the record medium prior to detection of an attribute, guide indicia are printed on the record medium. These guide indicia may comprise a line along which the customer is intended to provide an attribute or a box within which the attribute is to be enclosed.

The record medium may comprise a 1, 2 or 3 part medium taken from a suitable storage roll but may also include a preprinted document such as a cheque or a preprinted web which is then overprinted with transaction information.

As already mentioned above, the invention is also applicable in biometric enrolment systems in which for example a number (such as 6) of physical biometric attributes of the same type eg signatures are obtained and then these are processed to generate a reference signature.

An example of a transaction device incorporating a reading assembly according to the invention will now be described with reference to the accompanying drawings, in which:-

Figure 1 is a block diagram of the apparatus;

Figure 2 is a block diagram of the signing unit shown in Figure 1;

Figure 3 is a schematic, perspective view of the signing unit;

Figure 4 is a schematic section taken on the line 4-4 in Figure 3; and,

Figure 5 is a flow diagram illustrating operation of the device.

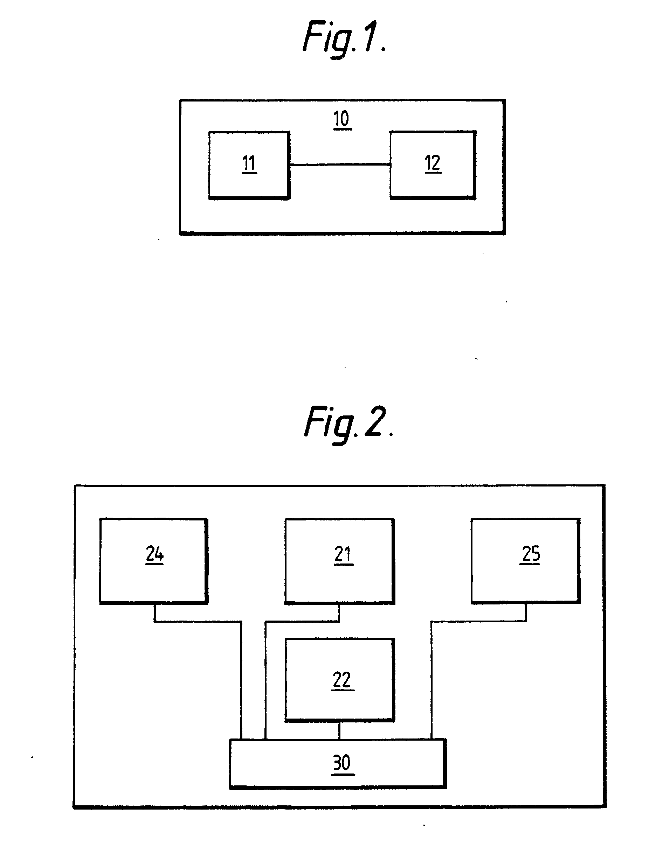

The terminal 10 shown in Figure 1 comprises a conventional EFTPOS terminal unit 11 logically connected to a signing unit 12 incorporating a microprocessor for signature capture and verification. As an alternative, the microprocessor could be incorporated into the terminal 11. Furthermore, the terminal 10 will be provided within a single housing although this is not essential.

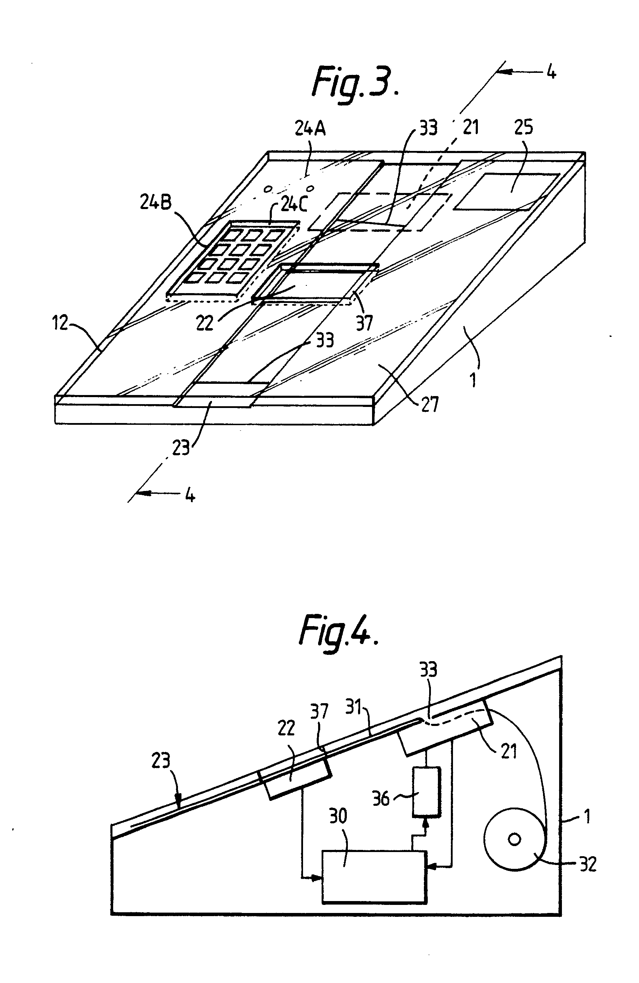

The signing unit 12 is contained within an ergonomically designed housing 1 (Figures 3 and 4) and includes a printer 21 over which a paper web 31 (Figure 4) passes. A signature capture pad 22 is located in a suitable position under the paper path so that the printed paper carrying details of the value transaction can be signed on the capture pad 22 without separation of the paper from its feed roll within the housing. The device also includes a microprocessor 30, a user interface 24 which in this example comprises an LCD display or lights (LEDs) 24A and a keypad 24B, and an IC card coupler and reader 25 (Figure 2). All the components of the signing unit 12 are connected to the microprocessor 30.

Paper is drawn from a feed roll 32 by the printer 21 which is driven by a motor 36. Information is printed on the paper by the printer 21 and the paper is then fed out of a slot 33 in the housing 1 and along a channel 23 which retains the printed paper or document in a fixed lateral position. In addition, the paper or document is held in place by a thin pliable coverlay 27, for example made from pvc. This coverlay has an aperture 37 in alignment with the signing pad 22, an aperture 24C in alignment with the keypad 24B, and is transparent to allow the transaction authoriser or customer sight that the printed details of the transaction are correct before signing to authorise the transaction. As an alternative, not shown, the paper path within the integrated unit from the paper feed mechanism over the printer head and signing pad may be designed to provide an adequately tensioned and securely retained method of holding the paper signing slip in a correct position for signature acquisition and verification without the need for a channel and coverlay.

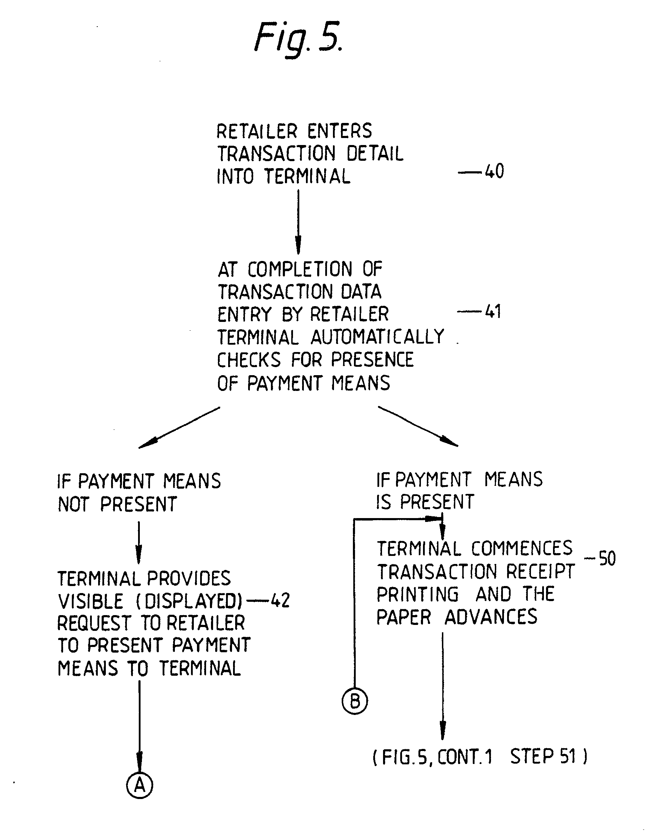

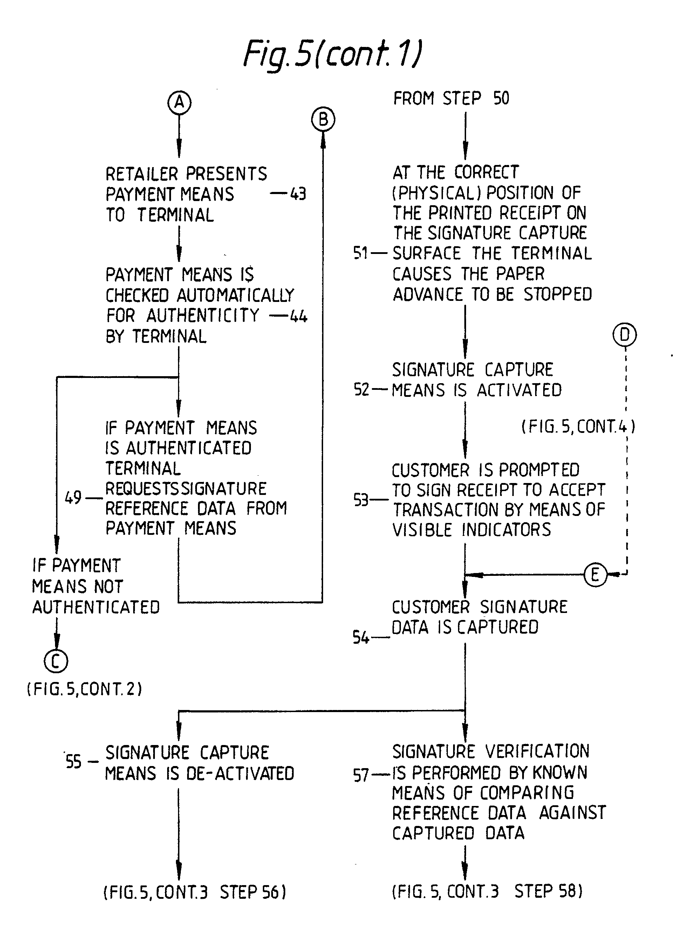

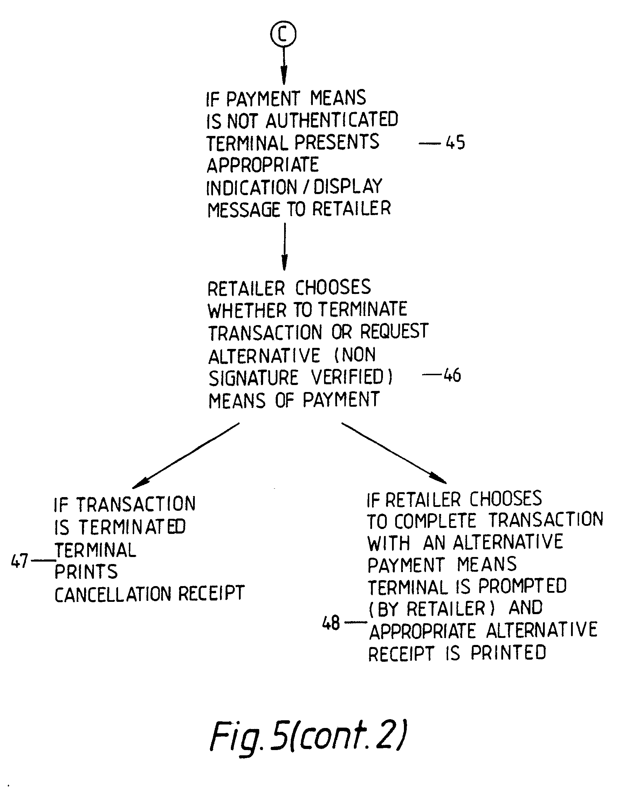

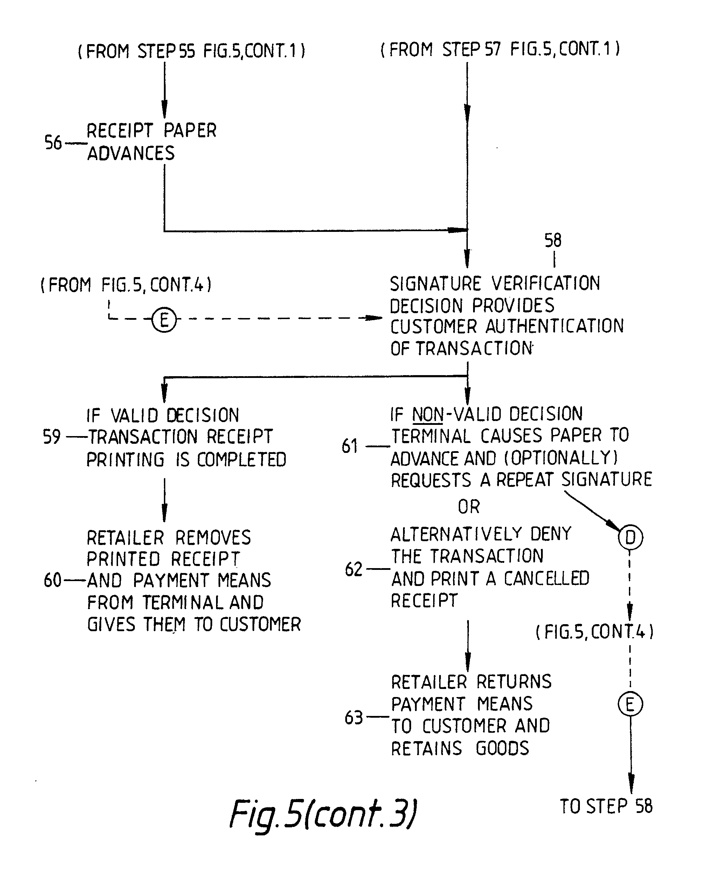

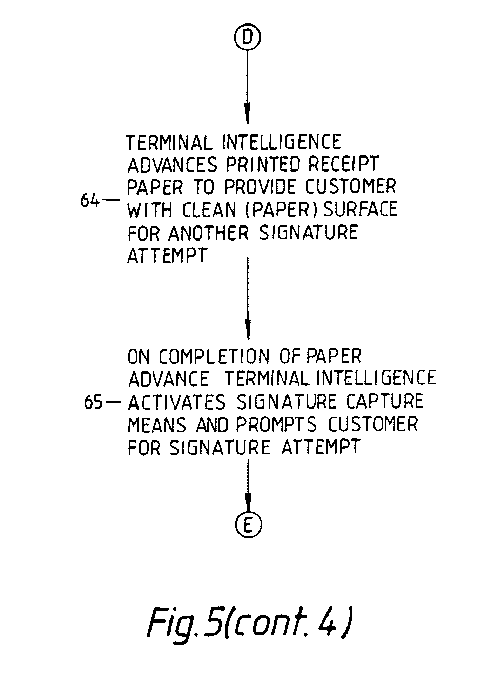

The operation of the device shown in the drawings will now be described with reference to the flow diagram of Figure 5. The device is attended typically by a representative of the value seller or service provider, for example a retailer. At the start of a transaction, the customer presents to the retailer a payment means, typically a transaction card which could be a multifunction IC card or more conventional card carrying a magnetic stripe which contains reference signature data. The retailer then enters the details of the transaction via the keypad 24B (step 40) and presents the card to the IC card coupler and reader 25. This could be by placing the card on an inductive coupler or by inserting the card into a contacting coupler. The microprocessor 30 checks to see whether the card has been presented to the terminal (ie is the card present) (step 40). If it has not, the microprocessor actuates the lights (or LCD display) 24A (step 42) which provides an indication to the retailer that the card should be presented to the terminal. The retailer presents the card to the terminal in the appropriate manner (step 43) and the microprocessor 30 via the IC card coupler and reader 25 then checks (step 44) that the card is authentic by checking for example the date of expiry, credit balance and the like.

If the card is not authenticated the microprocessor causes a suitable display by the lights 24A (step 45) and the retailer can then choose whether to terminate the transaction or request an alternative means of payment, for example cash or cheque (step 46). If the transaction is terminated, the microprocessor 30 causes the printer 21 to print a cancellation receipt (step 47) while if an alternative method of payment is chosen the printer 21 is caused to print an appropriate alternative receipt (step 48).

If the payment means (card) is authenticated the microprocessor causes the reference signature data on the card to be read (step 49). At this point the main transaction operation commences and the microprocessor activates the motor 36 which advances the paper 31 along the channel 23 (step 50).

During this initial movement the printer 21 is caused to print initial transaction data (for example the nature of the goods) and also a line along which the signature is to be written. The paper is advanced until this line is correctly positioned over the signing pad 22 whereupon the motor 36 is stopped (step 51). At the same time the signature pad 22 is activated (step 52). The customer is then prompted by suitable actuation of the lights 24A to sign the paper as revealed through the aperture 37 in the coverlay 27 (step 53) and the signature data is captured in a conventional manner by the use of the signature pad 22 (step 54).

As soon as the signature has been written, the signature pad 22 is deactivated (step 55) and the microprocessor 30 causes the motor 36 to advance the paper 31 (step 56). Simultaneously, the microprocessor 30 performs a signature verification algorithm in which the captured data is compared with the previously obtained reference data (step 57). It should be appreciated that at this stage since the paper is being advanced, it is not possible for the customer to apply a signature to the paper.

The verification algorithm can take any conventional form and will not be described in detail. If the result of the verification is that a valid signature has been applied (step 58) then the microprocessor 30 causes the printer 21 to print a valid indication on the paper 31 (step 59).

The retailer then lifts the coverlay 27 or causes the record medium to advance beyond the end of the housing 1 so that the receipt can be removed (step 60). In an alternative embodiment (not shown) the paper 31 could comprise a multilaminate with the lowermost layer passing through a downstream slot (not shown) in the channel 23 onto a take up spool within the housing so that a permanent record of transactions is kept. Alternatively, the lower sheet could be torn off at the same time as the upper sheet and stored separately.

If the signature is not validated the microprocessor 30 can request a repeat signature (step 61) or alternatively print a suitable non-validation mark on the paper 31 (step 62) following which the retailer would return the payment means (card) to the customer and retain the goods (step 63).

In the case of an additional signature request, the paper 31 would be advanced once again (step 64) possibly after a further line has been printed by the printer 21 to provide the customer with clean paper for another signature attempt. The paper advance is then stopped and the signature pad 22 activated and the customer is then prompted to apply his signature as before (step 65).

**Claims**

1. A biometric reading assembly comprising a physical biometric reading device (22) for reading a physical biometric attribute received on an attribute receiving surface; and control means (30) coupled to the biometric reading device to analyze the attribute read by the reading device, the control means being adapted to prevent the presentation of a biometric attribute when the device is not ready to receive an attribute by causing movement of the attribute receiving surface (31).

2. An assembly according to claim 1, further comprising record medium movement means for moving a record medium constituting the attribute receiving surface, past the biometric reading device, the control means controlling operation of the record medium movement means so that a record medium is moved past the biometric reading device when the device is not ready to receive an attribute thereby preventing presentation of the attribute.

3. An assembly according to claim 1 or claim 2, wherein the reading device is a signature pad.

4. A biometric enrolment system comprising an assembly according to any of the preceding claims, wherein the control means includes processing means adapted to generate a reference attribute from a number of presented attributes of the same type.

5. A transaction device for use in controlling a transfer of value between a customer and a supplier, the device comprising a housing (1) supporting an assembly according to any of the preceding claims, input means (24B) mounted to the housing, the control means (30) being coupled to the input means for receiving data relating to the transaction from the input means, printing means (21) coupled to the control means for printing data relating to the transaction, and physical biometric verification means (30) coupled to the control means for verifying a biometric attribute of the customer, whereby the verification means indicates that the transaction may be completed if the biometric attribute is verified, the control means being adapted to prevent the presentation of a biometric attribute during a transfer of value transaction when the biometric reading device (22) is not ready to receive an attribute.

6. A device according to claim 5, wherein the control means (30) causes the printing means (21) to print further transaction data after a customer has been verified.

7. A device according to claim 5 or claim 6, further comprising data entry means (25) for entering reference biometric data relating to the customer.

8. A device according to claim 7, wherein the data entry (25) means comprises an IC card coupler and reader.

9. A device according to any of claims 5 to 8, when dependent on claim 2, wherein the printing means (21) prints on the record medium.

10. A device according to claim 9, when dependent on claim 3, wherein the signature pad (22) is positioned under the path of the record medium (31) on which transaction data is printed by the printing means (21).

11. A device according to claim 10, further including a mask (27) defining a window (37) positioned over the record medium path and in alignment with the signature pad.

12. A device according to claim 10 or claim 11, further including guide means (23) for restricting movement of the record medium during the signing process.

13. A device according to any of the preceding claims, further comprising display means (24A) connected to the control means for displaying information to a user.

14. A method of operating a physical biometric reading device in which a physical biometric attribute is presented to an attribute receiving surface, the method comprising preventing presentation of an attribute when the reading device is not ready to receive an attribute by causing movement of the attribute receiving surface.

15. A method according to claim 14, wherein the attribute receiving surface is a record medium.

16. A method of biometric enrolment according to claim 14 or claim 15, comprising reading a number of presented attributes of the same type and generating a reference attribute therefrom.

17. A method of operating physical biometric verification means during a transfer of value transaction in which a customer presents a physical biometric attribute to an attribute receiving surface of a biometric reading device, the method comprising operating the reading device in accordance with claim 14 or claim 15.

18. A method according to claim 17, when dependent on claim 15, wherein transaction data is printed on the record medium during movement of the record medium.

19. A method according to claim 18, wherein transaction data is printed after an attribute is presented.

20. A method according to at least claim 15, wherein indicia are printed on the record medium prior to stopping movement of the record medium, the indicia defining the location at which an attribute is to be applied.

21. A method according to any of claims 14 to 20, wherein the attribute is a signature.

## Fig.1.

## Fig.2.

# Fig.3.

# Fig.4.

# Fig. 5.

RETAILER ENTERS
TRANSACTION DETAIL
INTO TERMINAL —40

AT COMPLETION OF
TRANSACTION DATA
ENTRY BY RETAILER —41
TERMINAL AUTOMATICALLY
CHECKS FOR PRESENCE
OF PAYMENT MEANS

IF PAYMENT MEANS
NOT PRESENT

IF PAYMENT MEANS
IS PRESENT

TERMINAL PROVIDES
VISIBLE (DISPLAYED) —42
REQUEST TO RETAILER
TO PRESENT PAYMENT
MEANS TO TERMINAL

TERMINAL COMMENCES —50
TRANSACTION RECEIPT
PRINTING AND THE
PAPER ADVANCES

Ⓑ

Ⓐ

(FIG.5, CONT.1 STEP 51)

# Fig. 5(cont. 1)

Ⓐ

Ⓑ

FROM STEP 50

RETAILER PRESENTS
PAYMENT MEANS —43
TO TERMINAL

AT THE CORRECT
(PHYSICAL) POSITION OF
THE PRINTED RECEIPT ON
THE SIGNATURE CAPTURE
51— SURFACE THE TERMINAL
CAUSES THE PAPER
ADVANCE TO BE STOPPED

PAYMENT MEANS IS
CHECKED AUTOMATICALLY
FOR AUTHENTICITY —44
BY TERMINAL

Ⓓ

SIGNATURE CAPTURE
52— MEANS IS ACTIVATED

(FIG. 5, CONT.4)

IF PAYMENT MEANS
IS AUTHENTICATED
TERMINAL
49— REQUESTS SIGNATURE
REFERENCE DATA FROM
PAYMENT MEANS

CUSTOMER IS PROMPTED
TO SIGN RECEIPT TO ACCEPT
53— TRANSACTION BY MEANS OF
VISIBLE INDICATORS

Ⓔ

IF PAYMENT
MEANS NOT
AUTHENTICATED

CUSTOMER SIGNATURE
54— DATA IS CAPTURED

Ⓒ

(FIG. 5, CONT. 2)

55 — SIGNATURE CAPTURE
MEANS IS DE-ACTIVATED

SIGNATURE VERIFICATION
57— IS PERFORMED BY KNOWN
MEANS OF COMPARING
REFERENCE DATA AGAINST
CAPTURED DATA

(FIG. 5, CONT.3 STEP 56)

(FIG. 5, CONT.3 STEP 58)

Ⓒ

IF PAYMENT MEANS
IS NOT AUTHENTICATED
TERMINAL PRESENTS    — 45
APPROPRIATE
INDICATION / DISPLAY
MESSAGE TO RETAILER

RETAILER CHOOSES
WHETHER TO TERMINATE
TRANSACTION OR REQUEST
ALTERNATIVE (NON
SIGNATURE VERIFIED)    —46
MEANS OF PAYMENT

IF TRANSACTION
IS TERMINATED
TERMINAL
47—PRINTS
CANCELLATION RECEIPT

IF RETAILER CHOOSES
TO COMPLETE TRANSACTION
WITH AN ALTERNATIVE
PAYMENT MEANS
TERMINAL IS PROMPTED
(BY RETAILER) AND
48—APPROPRIATE ALTERNATIVE
RECEIPT IS PRINTED

*Fig. 5(cont. 2)*

(FROM STEP 55 FIG.5,CONT.1)     (FROM STEP 57 FIG.5,CONT.1)

56 — RECEIPT PAPER ADVANCES

58

(FROM FIG.5, CONT.4)

ⓔ

SIGNATURE VERIFICATION DECISION PROVIDES CUSTOMER AUTHENTICATION OF TRANSACTION

IF VALID DECISION
59 — TRANSACTION RECEIPT PRINTING IS COMPLETED

RETAILER REMOVES PRINTED RECEIPT
60 — AND PAYMENT MEANS FROM TERMINAL AND GIVES THEM TO CUSTOMER

IF NON-VALID DECISION
61 — TERMINAL CAUSES PAPER TO ADVANCE AND (OPTIONALLY) REQUESTS A REPEAT SIGNATURE
OR
ALTERNATIVELY DENY THE TRANSACTION
62 — AND PRINT A CANCELLED RECEIPT

ⓓ

(FIG.5,CONT.4)

RETAILER RETURNS PAYMENT MEANS
63 — TO CUSTOMER AND RETAINS GOODS

ⓔ

*Fig.5(cont.3)*

TO STEP 58

(D)

64— TERMINAL INTELLIGENCE
ADVANCES PRINTED RECEIPT
PAPER TO PROVIDE CUSTOMER
WITH CLEAN (PAPER) SURFACE
FOR ANOTHER SIGNATURE
ATTEMPT

65— ON COMPLETION OF PAPER
ADVANCE TERMINAL INTELLIGENCE
ACTIVATES SIGNATURE CAPTURE
MEANS AND PROMPTS CUSTOMER
FOR SIGNATURE ATTEMPT

(E)

*Fig. 5(cont. 4)*